# EUROPÄISCHE PATENTANMELDUNG

(11) **EP 4 484 759 A1**
(43) Veröffentlichungstag der Anmeldung: **01.01.2025**
(21) Anmeldenummer: 24181573.7
(22) Anmeldetag: 12.06.2024
(51) Int. Cl.: F04D 29/42

(54) **SPRITZGEGOSSENES GEHÄUSE, KERNANORDNUNG ZUM HERSTELLEN EINES SPRITZGEGOSSENEN GEHÄUSES UND SPRITZGUSSWERKZEUG AUFWEISEND EINE SOLCHE KERNANORDNUNG**

(30) Priorität: 27.06.2023 DE 202023103544 U
(71) Anmelder: Grundfos Holding A/S, 8850 Bjerringbro (DK)
(72) Erfinder: Døssing, Bent, 8850 Bjerringbro (DK); Jensen, Olav, 8850 Bjerringbro (DK)
(74) Vertreter: Rupp, Christian

(57) **Zusammenfassung**

Ein spritzgegossenes Gehäuse aus Kunststoff und/oder einem Verbundwerkstoff für eine fluidführende Vorrichtung, insbesondere für eine Kreiselpumpe, weist auf:
- einen Einlassstutzen (3) mit einem Einlasskanal (4) für ein Fluid,
- einen Auslassstutzen (5) mit einem Auslasskanal (6),
- eine Kammer (2) für ein drehantreibbares Förderrad, wobei die Kammer (2) eine Einlassöffnung (16) aufweist, in die ein proximales Ende (41) des Einlasskanals (4) mündet, und
- einen Befestigungsbereich (20), der sich im Wesentlichen senkrecht zu einer Mittenachse (30) der Kammer (2) radial nach außen erstreckt,

wobei der Einlassstutzen (3) eine Wand aufweist (31), die wenigstens einen Teil des proximalen Endes (41) des Einlasskanals (4) und wenigstens einen Teil der Einlassöffnung (16) begrenzt, wobei die Wand (31) zu der Mittenachse (30) quer verläuft,
wobei die Wand (31) erhalten ist durch Spritzgießherstellen mit einem Kern (101), der zur Mittenachse (30) der Kammer (2) quer verläuft.

## Beschreibung

Die Erfindung betrifft ein spritzgegossenes Gehäuse für eine fluidführende Vorrichtung, insbesondere für eine Kreiselpumpe, eine Kernanordnung zum Herstellen eines spritzgegossenen Gehäuses für eine fluidführende Vorrichtung, insbesondere für eine Kreiselpumpe, ein Spritzgusswerkzeug aufweisend eine solche Kernanordnung und ein Gehäuse erhalten durch wenigstens Spritzgießherstellung mit einer solchen Kernanordnung oder mit einem solchen Spritzgusswerkzeug.

Beispielsweise bei Heizungsumwälzpumpaggregaten, die in Stückzahlen von mehreren tausend pro Tag hergestellt werden, werden derartige Gehäuse benötigt. Diese Aggregate werden als einstufige Inline-Kreiselpumpenaggregate ausgebildet, deren mit dem Motorgehäuse verschraubtes Pumpengehäuse einen Einlassstutzen (Saugstutzen), der ein Einlasskanal enthält, aufweist; das Gehäuse weist zudem einen Auslassstutzen (Druckstutzen), der einen Auslasskanal enthält, auf.

Derartige Gehäuse haben zwar ein relativ geringes Gewicht, stellen aber im Vergleich zu gusseisernen Gehäusen nicht sehr günstige Strömungsverhältnisse bereit. Das heißt, beim Einsatz solcher Gehäuse in einer fluidführenden Vorrichtung wie beispielsweise einer Kreiselpumpe kann es zu ungewollten Leistungsverlusten kommen, wodurch die Effizienz der Vorrichtung vermindert ist. Gusseiserne Gehäuse bieten zwar günstigere Strömungsverhältnisse, sind aber nur aufwendig herstellbar.

Die Aufgabe der Erfindung besteht darin, ein Gehäuse der einleitend angeführten Art bereitzustellen, das einfacher herzustellen ist und gleichzeitig günstige Strömungsverhältnisse bereitstellt, d.h. insbesondere die Leistung einer fluidfördernden Vorrichtung wie einer Pumpe nicht verringert. Insbesondere ist es eine Aufgabe der Erfindung, ein Gehäuse der einleitend angeführten Art bereitzustellen, das einfacher herstellbar ist und, insbesondere im Vergleich zu gusseisernen Gehäusen, gleichzeitig keine oder nur eine sehr geringe Leistungseinbuße verursacht.

Die Lösung der Aufgabe ist in den unabhängigen Ansprüchen angeben. Die abhängigen Ansprüche betreffen vorteilhafte Weiterbildungen.

Gemäß einem ersten Aspekt betrifft die Erfindung ein spritzgegossenes Gehäuse aus Kunststoff und/oder einem Verbundwerkstoff für eine fluidführende Vorrichtung, insbesondere für eine Kreiselpumpe, wobei das Gehäuse aufweist: einen Einlassstutzen mit einem Einlasskanal für ein Fluid (insbesondere eine Flüssigkeit); einen Auslassstutzen mit einem Auslasskanal; eine Kammer für ein drehantreibbares Förderrad, wobei die Kammer eine Einlassöffnung aufweist, in die ein proximales Ende des Einlasskanals mündet; und einen Befestigungsbereich, der sich im Wesentlichen senkrecht zu einer Mittenachse der Kammer radial nach außen erstreckt. Der Einlassstutzen weist eine Wand auf, die wenigstens einen Teil des proximalen Endes des Einlasskanals und wenigstens einen Teil der Einlassöffnung begrenzt, wobei die Wand zu der Mittenachse quer verläuft. Die Wand ist erhalten durch Spritzgießherstellen mit einem Kern, der zur Mittenachse der Kammer quer verläuft

Mit der erfindungsgemäßen Lösung ist es möglich, in dem Einlassstutzen für günstige Strömungsverhältnisse zu sorgen, sodass die Druckverluste innerhalb des Einlasskanals reduziert sind. Insbesondere durch den Verlauf der Wand quer zu der Mittenachse der Kammer wird ein Einlasskanal gebildet, der einen Strömungsweg hin zu der Einlassöffnung definiert, entlang welchem der Druck des strömenden Fluids (z.B. eine Flüssigkeit) besonders wenig reduziert wird. Zudem kann das Fluid aufgrund der quer zu der Mittenachse verlaufenden Wand besonders gut von dem Einlasskanal über die Einlassöffnung in die Kammer strömen, sodass auch an dem Übergang Einlasskanal zu Kammer besonders wenig Druckverluste auftreten. Die zur Mittenachse der Kammer quer verlaufende Wand ermöglicht zudem eine besonders einfache Herstellung unter Verwendung von Spritzgießen.

Die Wand hat damit relativ zu der Mittenachse der Kammer eine Neigung, die sich nicht nur durch eine gießtechnisch bedingte Schräge ergibt (damit der Kern später aus dem gegossenen Gehäuse entfernt werden kann), sondern auch dadurch ergibt, dass der Kern zur Gießherstellung der Wand quer zur Mittenachse der Kammer verläuft, wenn die Kammer hergestellt ist. In einem Zustand, in dem das Gehäuse wenigstens teilweise gießhergestellt ist, ist der Kern also wenigstens teilweise in dem proximalen (gehäuseinneren oder -nahen) Ende des Einlasskanals angeordnet, und zwar derart, dass er zu der Mittenachse der Kammer quer verläuft. Der Kern kann dann einfach durch Zugbewegung entlang oder parallel zu der Querrichtung (entlang welcher der Kern zu der Mittenachse der Kammer quer verläuft) aus dem Einlasskanal entnommen werden.

Der Kern kann eine Mittenachse aufweisen, die quer zur Mittenachse der Kammer verläuft. Die Mittenachse des Kerns ist vorzugsweise eine Mittenachse eines insbesondere zylindrischen und/oder konischen Abschnitts des Kerns, wobei durch (d.h. mit oder mittels oder unter Verwendung von) einen solchen Abschnitt wenigstens die Wand und vorzugsweise wenigstens ein Teil der Einlassöffnung gießhergestellt ist. Der Abschnitt des Kerns weist vorzugsweise einen elliptischen Querschnitt auf. Somit kann der Abschnitt des Kerns beispielsweise einen Zylinder mit elliptischer Grundfläche bilden. Der elliptische Querschnitt kann insbesondere so ausgebildet sein, dass durch Spritzgießherstellen mit dem zur Mittenachse der Kammer quer verlaufenden Kern die Einlassöffnung kreisrund wird. Das heißt, ist der Kern zu der Mittenachse der Kammer quer vorgesehen und erfolgt ein Schnitt durch den besagten Abschritt senkrecht zu der Mittenachse der Kammer, ist der so erhaltene Querschnitt dieses Abschnitts vorzugsweise kreisrund.

In einem Schnitt parallel zur Mittenachse der Kammer kann sich die Wand ausgehend von der Einlassöffnung, insbesondere ausgehend von einem die Einlassöffnung begrenzenden Rand, entlang einer Geraden erstrecken, die quer zur Mittenachse der Kammer ist. Die Wand kann somit für besonders günstige Strömungsverhältnisse in dem Einlasskanal sorgen.

Ein Winkel zwischen der Wand oder einer Mittenachse des proximalen Endes des Einlasskanals und der Mittenachse der Kammer kann in einem Bereich von 5° bis 50°, vorzugsweise von 15° bis 45°, besonders bevorzugt von 25° bis 40°, beispielsweise von 34° bis 38° liegen. In einem Ausführungsbeispiel beträgt dieser Winkel in etwa 36°. Die Mittenachse des proximalen Endes kann beispielsweise die Mittenachse oder Symmetrieachse eines zylinderförmigen und/oder konischen Abschnitts oder Hohlraums des proximalen Endes sein.

Der Einlasskanal kann ein distales (gehäusefernes) Ende aufweisen, wobei ein Winkel zwischen einer Mittenachse des distalen Endes und der Wand oder einer Mittenachse des proximalen Endes des Einlasskanals stumpf ist und vorzugsweise in einem Bereich von 90° bis 110°, besonders bevorzugt von 95° bis 105° liegt. In einem Ausführungsbeispiel beträgt dieser Winkel in etwa 100°. Durch den stumpfen Winkel werden besonders gute Strömungsverhältnisse bereitgestellt. Die Mittenachse des distalen Endes kann beispielsweise die Mittenachse oder Symmetrieachse eines zylinderförmigen und/oder konischen Abschnitts oder Hohlraums des distalen Endes sein.

Ein Winkel zwischen einer Achse, auf der der Einlassstutzen und der Auslassstutzen jeweils wenigstens teilweise angeordnet sind und die sich vorzugsweise durch einen Anschluss (des Einlassstutzens und einen Anschluss des Auslassstutzens erstreckt (oder einer Mittenachse des Auslasskanals) und einer Mittenachse des distalen Endes des Einlasskanals kann in einem Bereich von 15° bis 35°, vorzugsweise von 20° bis 30°, besonders bevorzugt von 24° bis 28° liegt. In einem Ausführungsbeispiel beträgt dieser Winkel in etwa 26°. Die Mittenachse des Auslasskanals kann beispielsweise die Mittenachse oder Symmetrieachse eines zylinderförmigen und/oder konischen Abschnitts oder Hohlraums des Auslasskanals, insbesondere des distalen Endes desselben, sein.

Der Befestigungsbereich kann ein Flansch sein und/oder sich wenigstens teilweise um die Mittenachse herum erstrecken. Der Befestigungsbereich kann ein oder mehrere Befestigungsbereiche wie beispielsweise Öffnungen, insbesondere Durchgriffsöffnungen, aufweisen. Durch die eine oder mehreren Öffnungen kann beispielsweise jeweils ein Befestigungsmittel (Schraube etc.) durchgeführt werden. Die eine oder mehreren Öffnungen können mit einem Gewinde versehen sein. Über den Befestigungsbereich kann die Kammer oder ein die Kammer aufweisender Körper mit einem Gehäuseteil wie beispielsweise einem oberen Gehäuseteil verbunden werden. Das Gehäuseteil kann ein Gehäusedeckel oder ein sonstiges Teil, das die Kammer (beispielsweise von oben) begrenzt, sein.

Der Einlassstutzen kann eine konvexe Rundung aufweisen, die wenigstens das proximale Ende des Einlasskanals seitlich begrenzt. Dadurch kann ein scharfer oder unstetiger Übergang der Strömungsrichtung in das proximale Ende des Einlasskanals vermieden oder zumindest reduziert werden. So ergeben sich in dem Einlasskanal besonders gute Strömungsverhältnisse.

Die konvexe Rundung begrenzt vorzugsweise auch das distale Ende des Einlasskanals seitlich. Dadurch kann ein besonders guter Strömungsverlauf von dem distalen Ende in das proximale Ende des Einlasskanals bereitgestellt werden, sodass die Enden des Einlasskanals zueinander zwar quer verlaufen, die konvexe Rundung aber Druckverluste im Fluid beim Strömen von dem distalen Ende in das proximale Ende weitestgehend vermeidet.

Die konvexe Rundung kann in einem Schnitt parallel zur Mittenachse der Kammer einen Bogen beschreiben, wobei ein Winkel zwischen zwei Tangenten, die Endpunkte des Bogens berühren, stumpf ist und vorzugsweise in einem Bereich von 90° bis 110°, besonders bevorzugt von 95° bis 105° liegt. In einem Ausführungsbeispiel beträgt dieser Winkel in etwa 100°. Somit kann durch die konvexe Rundung ein Druckverlust in dem Einlasskanal besonders gut vermieden werden.

Gemäß einem zweiten Aspekt betrifft die Erfindung eine Kernanordnung zum wenigstens teilweise Herstellen (insbesondere Spritzgießherstellen) eines spritzgegossenen Gehäuses für eine fluidführende Vorrichtung, insbesondere für eine Kreiselpumpe, wobei das Gehäuse aufweist: einen Einlassstutzen mit einem Einlasskanal für ein Fluid und eine Kammer für ein drehantreibbares Förderrad, wobei die Kammer eine Einlassöffnung aufweist, in die ein proximales Ende des Einlasskanals mündet. Die Kernanordnung weist auf: einen ersten Kern, wobei unter Verwendung von wenigstens dem ersten Kern wenigstens ein Teil der Kammer durch Spritzgießen herstellbar ist; und einen zweiten Kern, wobei unter Verwendung von wenigstens dem zweiten Kern wenigstens ein Teil des proximalen Endes des Einlasskanals und wenigstens ein Teil der Einlassöffnung durch Spritzgießen herstellbar ist. Der zweite Kern ist von dem ersten Kern lösbar und verläuft relativ zu dem ersten Kern quer.

Somit ist es möglich, das proximale Ende des Einlasskanals und die Einlassöffnung einfach herzzustellen, insbesondere derart, dass die Druckverluste in dem Einlasskanal reduziert sind. Durch die Anordnung der Kerne ist es insbesondere möglich, dass der Einlasskanal so spritzgießhergestellt wird, dass in ihm ein scharfer Winkel (weniger als 90°), der in besonderem Maße Druckverluste verursachen kann, vermieden wird.

Eine Mittenachse des zweiten Kerns kann zu einer Mittenachse des ersten Kerns quer verlaufen. Die Mittenachse kann die Mittenachse, vorzugsweise die Symmetrieachse, eines zylindrischen und/oder konischen Abschnitts des ersten Kerns und/oder des zweiten Kerns sein.

Ein Winkel zwischen dem ersten Kern und dem zweiten Kern, vorzugsweise zwischen deren Mittenachsen, kann in einem Bereich von 5° bis 50°, vorzugsweise von 15° bis 45°, besonders bevorzugt von 25° bis 40°, beispielsweise von 34° bis 38° liegen. In einem Ausführungsbeispiel beträgt dieser Winkel in etwa 36°.

Der zweite Kern kann sich wenigstens teilweise innerhalb des ersten Kerns erstrecken. Somit sind die Kerne besonders platzsparend zueinander angeordnet. Der erste Kern kann eine Aussparung aufweisen, in der wenigstens ein Teil des zweiten Kerns angeordnet ist. Über die Aussparung kann der zweite Kern linear geführt sein. Nach dem Gießen wenigstens eines Teils des Gehäuses kann der zweite Kern beispielsweise einfach durch Zugbewegung aus dem ersten Kern und damit aus dem proximalen Ende des Einlasskanals und aus der Einlassöffnung bewegt werden.

Durch die Erstreckung des zweiten Kerns derart, dass dieser relativ zum ersten Kern quer verläuft, kann insbesondere erzielt werden, dass zum einen eine strömungstechnisch vorteilhafte Ausbildung des proximalen Endes des Einlasskanals und der Einlassöffnung bereitgestellt werden kann und zum anderen der zweite Kern einfach, d.h. insbesondere ohne Zerstörung des Kerns, aus dem fertig gegossenen Gehäuse entnommen werden kann.

Unter Verwendung von wenigstens dem ersten Kern kann wenigstens ein Teil eines Befestigungsbereichs des Gehäuses, der sich im Wesentlichen senkrecht zu einer Mittenachse der Kammer radial nach außen erstreckt, durch Spritzgießen herstellbar sein. Vorzugsweise ist der erste Kern zumindest so ausgebildet, dass durch ihn bei einer Gießherstellung ein radial innerer Rand des Befestigungsbereichs gebildet wird. Alternativ oder zusätzlich kann der erste Kern so ausgebildet sein, dass durch ihn ein oder mehrere (weitere) Bereiche des Befestigungsbereichs (beispielsweise eine oder mehrere Befestigungsstrukturen wie beispielsweise Öffnungen und/oder ein äußerer Rand) und/oder ein radial äußerer Rand des Befestigungsbereichs gießhergestellt werden können.

Unter Verwendung von wenigstens dem ersten Kern kann wenigstens ein Teil eines spiralförmigen Strömungskanals des Gehäuses durch Spritzgießen herstellbar sein. Der spiralförmige Strömungskanal und die Einlassöffnung sind vorzugsweise in demselben Körper ausgebildet. Der spiralförmige Strömungskanal weist vorzugsweise ein stromabwärtiges Ende auf, mit dem er in einen Auslasskanal des Gehäuses mündet. Mit anderen Worten ist das stromabwärtige Ende des Strömungskanals vorzugsweise mit dem Auslassstutzen und insbesondere mit dessen Auslasskanal fluidtechnisch verbunden. Das stromaufwärtige Ende des Strömungskanals ist vorzugsweise mit der Kammer fluidtechnisch verbunden.

Die Kernanordnung kann ferner einen Einlasskanalkern aufweisen, wobei unter Verwendung von wenigstens dem Einlasskanalkern wenigstens ein Teil eines distalen Endes des Einlasskanals durch Spritzgießen herstellbar ist. Der Winkel zwischen dem zweiten Kern und dem Einlasskanalkern, vorzugsweise zwischen deren Mittenachsen, ist vorzugsweise stumpf und liegt besonders bevorzugt in einem Bereich von 90° bis 110°, insbesondere von 95° bis 105°. In einem Ausführungsbeispiel beträgt dieser Winkel in etwa 100°. Die Mittenachse des Einlasskanalkerns kann die Mittenachse, vorzugsweise die Symmetrieachse, eines zylindrischen und/oder konischen Abschnitts des Einlasskanalkerns sein.

Unter Verwendung von wenigstens der Kernanordnung, insbesondere dem Einlasskanalkern und/oder dem zweiten Kern, kann eine konvexe Rundung durch Spritzgießen herstellbar sein, die wenigstens das proximale Ende und vorzugsweise das distale Ende des Einlasskanals begrenzt. Somit kann die konvexe Rundung, die, wie oben beschrieben, für besonders gute Strömungsverhältnisse in dem Einlasskanalkern sorgt, besonders einfach hergestellt werden.

Die Kernanordnung, beispielsweise der zweite Kern und/oder der Einlasskanalkern, kann einen reduzierbaren, insbesondere zusammenlegbaren und/oder einfahrbaren Abschnitt zur Spritzgießherstellung der konvexen Rundung aufweisen, wobei unter Verwendung von wenigstens diesem Abschnitt die konvexe Rundung durch Spritzgießen herstellbar ist. Somit kann die konvexe Rundung besonders kostengünstig hergestellt werden. Durch den reduzierbaren Abschnitt können Teile der Kernanordnung, also beispielsweise der Einlasskanalkern und/oder der zweite Kern, besonders gut aus dem fertig gießhergestellten Einlasskanal nebst konvexer Rundung entnommen werden. So ist es beispielsweise denkbar, dass im reduzierten Zustand des Abschnitts ein Bereich des Einlassstutzens, wie beispielsweise die konvexe Rundung, der Entnahme des Einlasskanalkerns und/oder des zweiten Kerns nicht im Weg steht. Somit kann durch den reduzierbaren Abschnitt insbesondere eine komplexe Geometrie der konvexen Rundung einfach, insbesondere ohne die Verwendung eines verlorenen Kerns, hergestellt werden.

Die Kernanordnung kann ferner einen Auslasskanalkern aufweisen, wobei unter Verwendung von wenigstens dem Auslasskanalkern wenigstens ein Teil eines Auslasskanals des Gehäuses durch Spritzgießen herstellbar ist. Ein Winkel zwischen dem Auslasskanalkern und dem Einlasskanalkern, vorzugsweise zwischen deren Mittenachsen, kann in einem Bereich von 15° bis 35°, vorzugsweise von 20° bis 30°, besonders bevorzugt von 24° bis 28° liegen. Die Mittenachse des Auslasskanalkerns kann die Mittenachse, vorzugsweise die Symmetrieachse, eines zylindrischen und/oder konischen Abschnitts des Auslasskanalkerns sein.

Der zweite Kern kann von dem ersten Kern zerstörungsfrei lösbar sein. Somit können dieselben Kerne zur Gießherstellung mehrerer Gehäuse verwendet werden.

Wenigstens der erste Kern und/oder der zweite Kern und/oder der Einlasskanalkern und/oder der Auslasskanalkern kann/können jeweils ein Dauerkern sein. Somit kann bei der Herstellung des Gehäuses insbesondere auf die Verwendung verlorener Kerne verzichtet werden. Die Herstellung ist somit besonders wirtschaftlich.

Ein Spritzgusswerkzeug, insbesondere eine Spritzgussform, kann eine wie oben beschriebene Kernanordnung aufweisen. Die Kernanordnung ist vorzugsweise eine Spritzgusskernanordnung.

Gemäß einem dritten Aspekt betrifft die Erfindung ein spritzgegossenes Gehäuse aus Kunststoff und/oder einem Verbundwerkstoff für eine fluidführende Vorrichtung, insbesondere für eine Kreiselpumpe, wobei das Gehäuse aufweist: einen Einlassstutzen mit einem Einlasskanal für ein Fluid; einen Auslassstutzen mit einem Auslasskanal; eine Kammer für ein drehantreibbares Förderrad, wobei die Kammer eine Einlassöffnung aufweist, in die ein proximales Ende des Einlasskanals mündet; und einen Befestigungsbereich, der sich im Wesentlichen senkrecht zu einer Mittenachse der Kammer radial nach außen erstreckt. Das Gehäuse ist dabei erhalten durch wenigstens Spritzgießherstellung mit einer wie zuvor beschriebenen Kernanordnung oder mit einem wie zuvor beschriebenen Spritzgusswerkzeug.

Der Einlassstutzen kann eine Wand aufweisen, die wenigstens einen Teil des proximalen Endes des Einlasskanals und wenigstens einen Teil der Einlassöffnung begrenzt, wobei die Wand durch den zweiten Kern der Kernanordnung gießhergestellt ist.

Das Gehäuse gemäß dem ersten Aspekt der Erfindung kann erhalten sein durch Gießherstellung mit einer wie oben beschriebenen Kernanordnung oder einem wie zuvor beschriebenen Spritzgusswerkzeug.

Das Gehäuse kann monolithisch ausgebildet sein. Das heißt, das Gehäuse kann einstückig ausgebildet sein. Somit ist das Gehäuse besonders kostengünstig herstellbar.

Die Erfindung betrifft ferner eine fluidführende Vorrichtung, insbesondere eine Kreiselpumpe, die ein wie oben beschriebenes Gehäuse aufweist. Zudem weist die fluidführende Vorrichtung ein drehantreibbares Förderrad auf, wobei das Förderrad wenigstens teilweise in der Kammer des Gehäuses angeordnet ist. Zudem ist das Förderrad so angeordnet, dass es um die Mittenachse der Kammer herum drehbar angeordnet ist. Die Mittenachse der Kammer und die Drehachse des Förderrads können somit parallel und/oder koaxial zueinander sein.

Die Erfindung ist nachstehend anhand eines in den anliegenden Zeichnungen dargestellten Ausführungsbeispiels näher erläutert. Es zeigen:
- Figur 1: das Ausführungsbeispiel in einer Ansicht von vorne,
- Figur 2: das Ausführungsbeispiel in einer Seitenansicht (von links in Fig. 1), und zwar mit Blick auf das distale Ende des Einlassstutzens,
- Figur 3: das Ausführungsbeispiel in einer Ansicht von oben (Draufsicht),
- Figur 4: das Ausführungsbeispiel in einem Axialschnitt (Schnitt parallel zur Mittenachse der Kammer) nach der Linie IV-IV in Figur 3,
- Figur 5: eine schematische Seitenansicht eines Ausführungsbeispiels einer Kernanordnung zur Spritzgießherstellung des Ausführungsbeispiels,
- Figur 6: ein Diagramm, in dem Pumpenkennlinien einer Pumpe mit einem erfindungsgemäßen Gehäuse verglichen werden mit Pumpenkennlinien einer Pumpe mit einem eisengegossenen Gehäuse.

Das in den Zeichnungen beispielsweise dargestellte Gehäuse ist für eine fluidführende Vorrichtung, insbesondere für eine Inline fluidführende Vorrichtung, vorgesehen. Die fluidführende Vorrichtung kann beispielsweise eine Kreiselpumpe oder eine andere fluidführende Vorrichtung wie zum Beispiel ein Ventil oder eine Armatur sein. Das Gehäuse weist einen Körper 1 auf, in dem eine Kammer 2 für ein drehantreibbares Förderrad (nicht gezeigt) vorgesehen ist. Das drehantreibbare Förderrad kann zum Beispiel ein Pumpenlaufrad sein.

Zudem weist das Gehäuse einen Einlassstutzen 3 mit einem Einlasskanal 4 auf. Zudem weist das Gehäuse einen Auslassstutzen 5 mit einem Auslasskanal 6 auf. Der Einlassstutzen 3 kann einen Anschluss 7 aufweisen, über den der Einlassstutzen 3 an eine Zuleitung angeschlossen werden kann. Der Anschluss 7 kann einen Gewindeanschluss und/oder einen Befestigungsflansch aufweisen. Der Auslassstutzen 5 kann einen Anschluss 8 aufweisen, über den der Auslassstutzen 5 an eine Ableitung angeschlossen werden kann. Der Anschluss 8 kann ein Gewindeanschluss und/oder einen Befestigungsflansch aufweisen. Die Zuleitung und die Ableitung können eine gemeinsame Achse haben und/oder koaxial angeordnet sein. Bevorzugt sind Zu- und Ableitung auf einer gleichen Höhe angeordnet. Es ist jeweils nur ein Einlassstutzen und ein Auslassstutzen gezeigt, jedoch ist es auch möglich, jeweils mehrere Stutzen vorzusehen, zum Beispiel zwei oder mehr Einlassstutzen 3 und/oder zwei oder mehr Auslassstutzen 5.

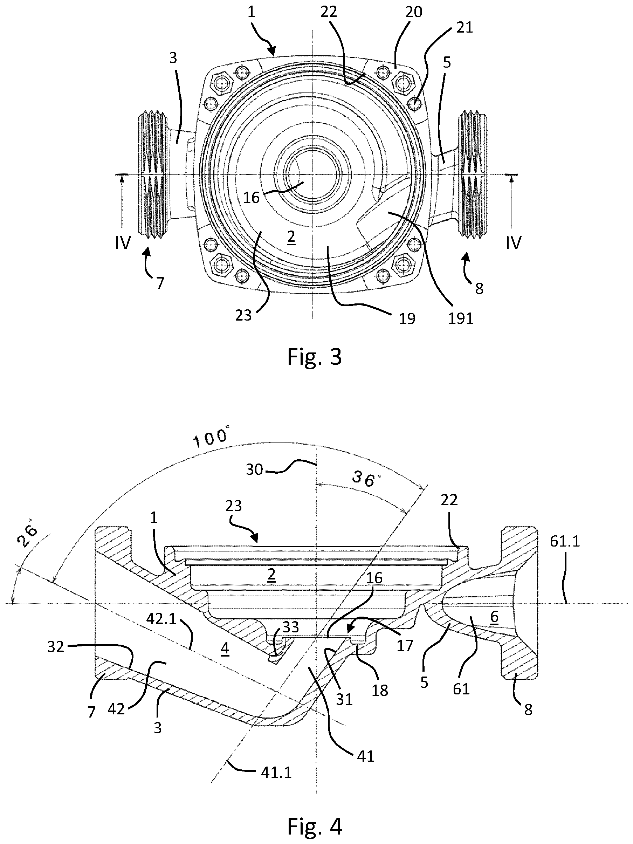

Wie insbesondere die Figur 4 gut erkennen lässt, weist der Einlasskanal 4 ein proximales (d.h. gehäuseinneres oder gehäusenahes) Ende 41 und ein distales (d.h. gehäuseäußeres oder gehäusefernes äußeres) Ende 42 auf. Wird das Gehäuse im Betrieb der fluidführenden Vorrichtung von einem Fluid durchströmt, ist das proximale Ende 41 ein stromabwärtiges Ende und das distale Ende 42 ein stromaufwärtiges Ende. Zudem weist die Kammer 2 eine Einlassöffnung 16 auf, die beispielsweise in dem Körper 1 ausgebildet ist. Das proximale Ende 41 des Einlasskanals 4 mündet in die Einlassöffnung 16.

Wie insbesondere die Figur 3 gut erkennen lässt, weist das Gehäuse einen Befestigungsbereich 20 auf, der beispielsweise ein Flansch ist. Der Befestigungsbereich 20 kann in dem Körper 1 ausgebildet sein. Über den Befestigungsbereich 20 kann die Kammer 2, und damit ein die Kammer 2 aufweisender Teil (beispielsweise Unterteil) des Gehäuses, wie beispielsweise der Körper 1, mit einem anderen Teil (beispielsweise Oberteil), insbesondere des Gehäuses, verbunden werden. An den Befestigungsbereich 20 kann beispielsweise ein Motor, der das Förderrad antreibt, befestigt werden. Der Befestigungsbereich 20 kann eine oder mehrere Befestigungsstrukturen 21 wie beispielsweise eine oder mehrere Öffnungen, vorzugsweise versehen mit oder ohne Gewinde, aufweisen.

Der Befestigungsbereich 20 erstreckt sich im Wesentlichen senkrecht zu einer Mittenachse 30 der Kammer 2 radial nach außen. Die Mittenachse 30 der Kammer 2 erstreckt sich dabei durch die Einlassöffnung 16 hindurch. Die Mittenachse 30 der Kammer 2 kann zu einer (gemeinsamen) Achse, entlang der die Anschlüsse 7, 8 angeordnet sind, senkrecht sein. Die Mittenachse 30 der Kammer 2 ist vorzugsweise eine Achse, die zu der Drehachse, um die sich das Förderrad, wenn dieses in der Kammer 2 wenigstens teilweise vorgesehen ist, drehen kann, parallel und/oder koaxial ist. Mit anderen Worten, wenn das Förderrad in der Kammer 2 wenigstens teilweise vorgesehen ist, kann das Förderrad um die Mittenachse 30 der Kammer 2 herum drehbar angeordnet sein. Zum Beispiel weist der Befestigungsbereich 20 einen ebenen Bereich auf, zu der die Mittenachse 30 der Kammer 2 senkrecht ist.

Der Befestigungsbereich 20 kann sich wenigstens teilweise um die Mittenachse 30 der Kammer 2 herum erstrecken. Der Befestigungsbereich 20 kann einen radial inneren Rand 22 aufweisen. Der Rand 22 begrenzt vorzugsweise eine Öffnung 23 der Kammer 2, über die vorzugsweise das Förderrad in der Kammer 2 vorgesehen (in diese also gelegt, angeordnet etc.) werden kann. Die Öffnung 23 liegt vorzugsweise der Einlassöffnung 16 gegenüber und/oder ist vorzugsweise größer als diese. Bevorzugt ist, wenn sich die Mittenachse 30 der Kammer 2 durch die Öffnung 23 und die Einlassöffnung 16 erstreckt. Die Öffnungen 16, 23 können entlang der Mittenachse 30 der Kammer 2 verteilt angeordnet sein. Der Rand 22 kann sich entlang eines Bogens erstrecken, der in einer Ebene liegt, wobei die Mittenachse 30 der Kammer 2 dann vorzugsweise senkrecht zu dieser Ebene ist. Bevorzugt ist, wenn der Rand 22 einen Radius aufweist, dessen Mittelpunkt auf der Mittenachse 30 der Kammer 2 liegt.

Wie insbesondere die Figur 4 gut erkennen lässt, weist der Einlassstutzen 3 eine Wand 31 auf, die zum einen wenigstens einen Teil des proximalen Endes 41 des Einlasskanals 4 und zum anderen wenigstens einen Teil der Einlassöffnung 16 begrenzt. Dies bedeutet, dass ein (freies oder distales) Ende der Wand 31 zumindest teilweise die Einlassöffnung 16 begrenzt. Insbesondere kann das Ende der Wand 31 einen Rand bilden, der die Einlassöffnung 16 begrenzt. Eine Ecke 17 kann den Rand aufweisen oder bilden. Die Ecke 17 ist vorzugsweise stumpf. Das Gehäuse kann einen Boden 18 aufweisen, der vorzugsweise die Kammer 2 (von unten) begrenzt, wobei die Ecke 17 Teil des Bodens 18 ist (also beispielsweise durch den Boden 18 wenigsten teilweise definiert ist) und/oder Teil eines sich von dem Boden 18 erstreckenden Vorsprungs (beispielsweise eines insbesondere ringförmigen Kragens, insbesondere Stehkragens) ist.

Die Wand 31 ist so vorgesehen, dass sie zu der Mittenachse 30 der Kammer 2 quer, insbesondere schräg verläuft. Hierdurch ergibt sich ein durch wenigstens das proximale Ende 41 und das distale Ende 42 gebildeter Strömungsweg, der einen besonders niedrigen Druckverlust verursacht. Mit anderen Worten ist durch die Neigung der Wand 31 relativ zu der Mittenachse 30 der Kammer 2 der durch den Einlasskanal 4 bedingte Verlust an Druckenergie reduziert. Bevorzugt ist, wenn in einem Schnitt parallel zu der Mittenachse 30 der Kammer 2, wie ihn Figur 4 zeigt, die Wand 31 sich ausgehend von der Einlassöffnung 16 - also von einem die Einlassöffnung 16 begrenzenden oder definierenden Rand - entlang (oder parallel zu) einer Geraden erstreckt, die quer zur Mittenachse 30 der Kammer 2 ist.

Zwischen der Wand 31 und der Mittenachse 30 der Kammer 2 liegt somit ein Winkel vor. Dieser Winkel ist so bemessen, dass er größer ist als ein Winkel, der sich ergibt, wenn eine Wand zu der Mittenachse 30 der Kammer 2 im Wesentlichen parallel und nur aufgrund einer gießtechnischen Konizität (minimal) geneigt ist, um einen zur Gießherstellung (durch Spritzgießen) einer solchen Wand erforderlichen Kern aus dem Gehäuse einfach entfernen zu können.

Wie in der Figur 4 dargestellt, kann der Winkel zwischen Wand 31 und Mittenachse 30 der Kammer 2 beispielsweise 36° betragen. Die Erfindung ist dabei jedoch nicht auf einen solchen Winkel beschränkt. Der Winkel kann auch andere Beträge annehmen, insbesondere Beträge in einem Bereich von 5° bis 50°, vorzugsweise von 15° bis 45°, besonders bevorzugt von 25° bis 40°, beispielsweise von 34° bis 38°.

Die Wand 31 begrenzt das proximale Ende 41 des Einlasskanals 4 vorzugsweise derart, dass das proximale Ende 41 eine Mittenachse 41.1 aufweist. Dies bedeutet, dass der durch das proximale Ende 41 definierte Strömungsweg und/oder die Wand 31 vorzugsweise zumindest teilweise parallel zur Mittenachse 41.1 des proximalen Endes 41 verläuft. Die Wand 31 kann, beispielsweise in einem Schnitt quer zur Mittenachse 41.1 des proximalen Endes 41, eine gebogene Form aufweisen. Die gebogene Form kann einen Mittelpunkt aufweisen, der auf der Mittenachse 41.1 des proximalen Endes 41 liegt. In einem Schnitt parallel zu einer durch die Mittenachse 30 der Kammer 2 und die Mittenachse 41.1 des proximalen Endes 41 aufgespannten Ebene kann die Wand 31 sich parallel zur Mittenachse 41.1 des proximalen Endes 41 erstrecken. Wie in der Figur 4 dargestellt, beträgt der Winkel zwischen der Mittenachse 41.1 des proximalen Endes 41 und der Mittenachse 30 der Kammer 2 beispielsweise 36°. Der Winkel zwischen der Mittenachsen 30 der Kammer 2 und der Mittenachse 41.1 des proximalen Endes 41 kann auch andere Beträge annehmen, insbesondere Beträge in einem Bereich von 5° bis 50°, vorzugsweise von 15° bis 45°, besonders bevorzugt von 25° bis 40°, beispielsweise von 34° bis 38°.

Dadurch, dass die Wand 31 zur Mittenachse 30 der Kammer 2 quer verläuft oder geneigt ist, ergibt sich eine Ausbildung des Einlasskanals 4 derart, dass dessen distales Ende 42 in Bezug auf das proximale Ende 41 strömungstechnisch vorteilhaft verläuft. Das distale Ende 42 weist eine Mittenachse 42.1 auf. Die Mittenachse 42.1 des distalen Endes 42 kann beispielsweise die Mittenachse und/oder Symmetrieachse eines zylindrischen und/oder konischen Abschnitts des distalen Endes 42 des Einlasskanals 4 bilden. Mit anderen Worten weist der Einlassstutzen 3 vorzugsweise eine (weitere) Wand 32 auf, die einen zylindrischen und/oder konischen Hohlraum begrenzt, der wenigstens teilweise das distale Ende 42 bildet, wobei sich die Mittenachse 42.1 des distalen Endes 42 durch diesen Hohlraum erstreckt und/oder eine Mittenachse (beispielsweise Symmetrieachse) dieses Hohlraums bildet. Alternativ oder zusätzlich kann die Mittenachse 42.1 des distalen Endes 42 parallel zu einem durch das distale Ende 42 des Einlasskanals 4 gebildeten Strömungsweg verlaufen.

Zwischen der Mittenachse 41.1 des proximalen Endes 41 und der Mittenachse 42.1 des distalen Endes 42 ergibt sich aufgrund der Neigung der Wand 31 relativ zu der Mittenachse 30 der Kammer 2 ein Winkel derart, dass ein Strömungsweg durch den Einlasskanal 4 gebildet wird, entlang welchem besonders geringe Druckverluste entstehen. Wie in der Figur 4 beispielhaft dargestellt, kann der Winkel zwischen der Mittenachse 41.1 des proximalen Endes 41 und der Mittenachse 42.1 des distalen Endes 42 beispielsweise 100° betragen. Der Winkel zwischen der Mittenachse 30 der Kammer 2 und der Mittenachse 41.1 des proximalen Endes 41 kann auch auf andere Weise stumpf sein, beispielsweise indem er in einem Bereich von 90° bis 110°, vorzugsweise von 95° bis 105° liegt.

Der Auslasskanal 6, insbesondere ein distales (d.h. gehäuseäußeres oder -fernes) Ende 61 des Auslasskanals 6, kann eine Mittenachse 61.1 aufweisen. Die Achse 61.1 des distalen Endes 61 des Auslasskanals 6 ist vorzugsweise parallel zu einer Auslassrichtung zum Ausleiten des Fluids aus dem Auslasskanal 6. Die Mittenachse 61.1 des distalen Endes 61 des Auslasskanals 6 ist vorzugsweise parallel zu einem durch den Auslasskanal 6 definierten Strömungsweg. Der Anschluss 8 erstreckt sich beispielsweise im Wesentlichen senkrecht zu der Mittenachse 61.1 des distalen Endes 61 des Auslasskanals 6 radial nach außen. Die Mittenachse 61.1 des distalen Endes 61 des Auslasskanals 6 kann sich im Wesentlichen senkrecht zur Mittenachse 30 der Kammer 2 erstrecken. Wie in der Figur 4 dargestellt, können das distale Ende 42 des Einlasskanals 4 und wenigstens ein Teil des Auslasskanals 6 (beispielsweise dessen distales Ende 61) so zueinander angeordnet sein, dass deren Mittenachsen 42.1, 61.1 zueinander geneigt sind, beispielsweise so, dass ein Winkel zwischen der Mittenachse 42.1 des distalen Endes 42 und der Mittenachse 61.1 des distalen Endes 61 des Auslasskanals 6 in einem Bereich von 15° bis 35°, vorzugsweise von 20° bis 30°, besonders bevorzugt von 24° bis 28° liegt oder beispielsweise, wie in Figur 4 beispielhaft dargestellt, 26° beträgt.

Um den Einlasskanal 4 noch weiter strömungstechnisch zu optimieren, kann der Einlassstutzen 3 eine konvexe Rundung 33 aufweisen. Die konvexe Rundung 33 ist dabei so vorgesehen, dass sie das proximale Ende 41 und vorzugsweise auch das distale Ende 42 des Einlasskanals 4 seitlich begrenzt. Die konvexe Rundung 33 ist insbesondere in einem Schnitt parallel zur Mittenachse 30 der Kammer 2 erkennbar, wie in Figur 4 beispielhaft dargestellt. Durch die konvexe Rundung 33 kann insbesondere ein Übergang, beispielsweise ausgehend von dem distalen Ende 42 des Einlasskanals 4, hin zu dem proximalen Ende 41 des Kanals 4, optimiert werden, sodass insbesondere in Richtung des wenigstens durch die Enden 41, 42 definierten Strömungswegs keine scharfen Ecken oder dergleichen vorhanden sind. Somit können die Druckverluste in dem Einlasskanal 4 noch weiter reduziert werden.

In einem Schnitt parallel zur Mittenachse 30 der Kammer 2, wie er beispielsweise in der Figur 4 erkennbar ist, kann die konvexe Rundung 33 gemäß einem Ausführungsbeispiel einen Bogen beschreiben. Dieser Bogen kann insbesondere so ausgebildet sein, dass ein Winkel zwischen zwei Tangenten, die Endpunkte des Bogens berühren, stumpf ist und vorzugsweise in einem Bereich von 90° bis 110°, besonders bevorzugt von 95° bis 105° liegt oder beispielsweise 100° beträgt. Diese Tangenten sind vorzugsweise parallel zur Mittenachse 42.1 des distalen Endes 42 bzw. Mittenachse 41.1 des proximalen Endes 41.

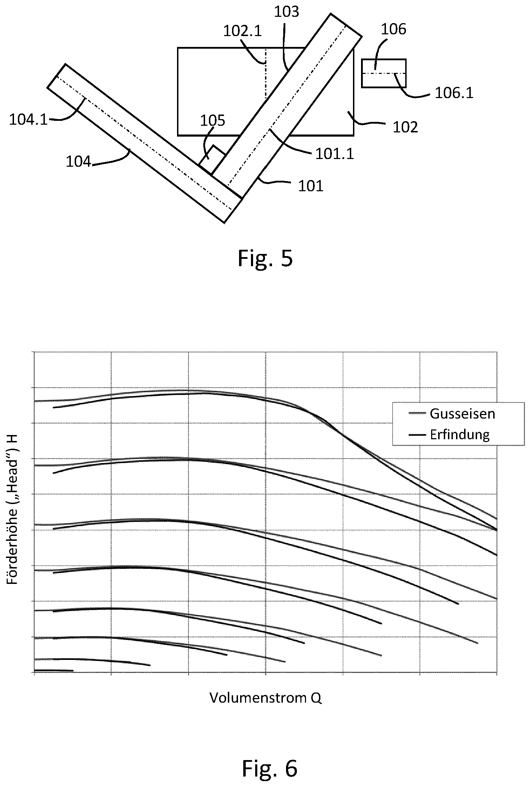

Die Wand 31 ist durch Gießherstellung, nämlich durch Spritzgießherstellung (Spritzgießen oder Spritzguss, insbesondere unter Verwendung einer Spritzgießmaschine), hergestellt. Wie in der Figur 5 beispielsweise dargestellt, kann die Wand 31 durch einen Kern 101 gießhergestellt sein; unter Verwendung von wenigstens dem (zweiten) Kern 101 kann also die Wand 31 durch Spritzgießen herstellbar sein, beispielsweise indem das Material (Kunststoff und/oder Verbundwerkstoff) in einen Zwischenraum zwischen dem Kern 101 und einem Bereich (Wand etc.) eines Spritzgusswerkzeugs (das beispielsweise den Kern 101 aufweist) gespritzt wird. Der Kern 101 weist dabei eine Mittenachse 101.1 auf, die beispielsweise eine Mittenachse (insbesondere Symmetrieachse) eines (beispielsweise elliptisch-) zylindrischen und/oder konischen Abschnitts des Kerns 101 darstellt. Durch diesen Abschnitt ergibt sich bei der Gießherstellung unter Verwendung eines Materials, nämlich eines Kunststoffs und/oder Verbundwerkstoffs, vorzugsweise die Form der Wand 31 und wenigstens ein Teil der Einlassöffnung 16.

Die Wand 31 wird unter Verwendung des Kerns 101 derart gießhergestellt (spritzgegossen), dass, sobald die Kammer 2 mit ihrer Mittenachse 30 der Kammer 2 hergestellt ist, insbesondere gießhergestellt ist, die Mittenachse 101.1 des Kerns 101 quer zur Mittenachse 30 der Kammer 2 verläuft. Der Kern 101 wird also zur Gießherstellung der Wand 31 so in einer Gussform vorgesehen, dass der Kern 101, sobald die Kammer 2 samt Mittenachse 30 der Kammer 2 hergestellt ist, mit seiner Mittenachse 101.1 quer zur Mittenachse 30 der Kammer 2 ist. Somit kann die strömungstechnisch vorteilhafte Ausbildung der Wand 31 besonders einfach hergestellt werden, insbesondere ohne dass verlorene Kerne genutzt werden. Der Kern 101 kann beispielsweise als Dauerkern ausgebildet sein, der nach der Gießherstellung der Wand 31 durch eine Zugbewegung parallel zu seiner Mittenachse 101.1 einfach aus dem gegossenen Einlasskanal 4, insbesondere aus dessen proximalen Ende 41, entfernt werden kann.

Die Neigung des Kerns 101 in Bezug auf die später erhaltene Mittenachse 30 der Kammer 2 definiert also die Neigung der Wand 31 relativ zu der Mittenachse 30 der Kammer 2. Insbesondere kann der Kern 101 derart weit geneigt sein, wie es die Herstellung des Befestigungsbereichs 20, insbesondere von dessen Rand 22, erlaubt. So kann der Kern 101 beispielsweise derart quer in eine Gussform gelegt sein, dass, sobald das Gehäuse mit dem Befestigungsbereich 20 (in einem einzigen Prozessschritt) hergestellt (insbesondere gießhergestellt) ist, der Kern 101 den Befestigungsbereich 20, insbesondere dessen Rand 22, gerade nicht berührt oder berührt, aber nicht derart, dass er mit ihm überlappt.

Mit anderen Worten kann der Kern 101 in der Gussform so vorgesehen sein, dass er dem Befestigungsbereich 20, insbesondere dessen Rand 22, während der Gießherstellung (gerade) keine Form gibt, sodass der Kern 101 nach der Gießherstellung des Befestigungsbereichs 20 beispielsweise an dem Rand 22 anliegt oder von diesem nur durch eine (relativ dünnwandige) Form zur Formgebung des Rands 22 beabstandet ist. Die Herstellung des Befestigungsbereichs 20 begrenzt damit die Neigung des Kerns 101 relativ zu der Mittenachse 30 der Kammer 2.

Wie in der Figur 5 dargestellt, kann die Kernanordnung 100 zusätzlich zu dem Kern 101, der zur Gießherstellung der Wand 31 (und damit von wenigstens einem Teil des proximalen Endes 41) und zur Gießherstellung wenigstens eines Teils der Einlassöffnung 16 vorgesehen ist, noch einen oder mehrere weitere Kerne aufweisen. Zum Beispiel kann die Kernanordnung 101 einen weiteren Kern 102 zur Gießherstellung von wenigstens einem Teil der Kammer 2 aufweisen; unter Verwendung von wenigstens dem (ersten) Kern 102 kann also wenigstens ein Teil der Kammer 2 durch Spritzgießen hergestellt werden. Somit kann die Kernanordnung 100 den Kern 102 als ersten Kern und den Kern 101 als zweiten Kern aufweisen. Die Kerne 101, 102 können einen zumindest zweiteiligen Kern ("Hauptkern") bilden, wobei beispielsweise der Kern 102 einen äußeren Kern und wenigstens ein Teil des Kerns 101 einen inneren Kern darstellt.

Die Kerne 101, 102 sind dabei so vorgesehen, dass der zweite Kern 101 von dem ersten Kern 102 (zerstörungsfrei) lösbar ist und relativ zu dem ersten Kern 102 quer verläuft. Dies bedeutet, dass die Kerne 101, 102 nicht koaxial sind. Der Kern 102 weist beispielsweise ebenfalls eine Mittenachse 102.1 auf, wobei die Mittenachse 101.1 des Kerns 101 und die Mittenachse 102.1 des Kerns 102 quer zueinander sind, beispielsweise bei Blick seitlich auf die Kernanordnung 100; die Mittenachse 101.1 des Kerns 101 und die Mittenachse 102.1 des Kerns 102 können beispielsweise in einer gemeinsamen Ebene angeordnet sein. Die Mittenachse 102.1 des Kerns 102 kann beispielsweise die Mittenachse (insbesondere Symmetrieachse) eines zylindrischen und/oder konischen Abschnitts des Kerns 102 sein. Durch diesen Abschnitt kann beispielsweise zumindest ein Teil des Befestigungsbereichs 20, wie beispielsweise der Rand 22, ausgebildet werden. Ist die Kammer 2 wenigstens teilweise durch den Kern 102 gießhergestellt, erstreckt sich die Mittenachse 102.1 des Kerns 102 vorzugsweise parallel und/oder koaxial zu der Mittenachse 30 der Kammer 2.

Durch Wahl eines Winkels zwischen den Kernen 101, 102, insbesondere zwischen deren Mittenachsen 101.1, 102.1, kann also die Wand 31 so hergestellt werden, dass sie zu der Mittenachse 30 der Kammer 2 quer verläuft. Demnach kann der Winkel zwischen den Kernen 101, 102 beispielsweise so gewählt werden, dass er in einem Bereich von 5° bis 50°, bevorzugt 15°bis 45°, besonders bevorzugt von 25° bis 40°, beispielsweise von 34 bis 38° liegt, um eine Wand 31 zu erhalten, die dann mit einem solchen Winkel zu der Mittenachse 30 der Kammer 2 quer verläuft.

Wie in der Figur 5 dargestellt, kann der Kern 101 sich wenigstens teilweise innerhalb des Kerns 102 erstrecken. Insbesondere kann der Kern 102 eine Aussparung 103 aufweisen, in der wenigstens ein Teil des Kerns 101 angeordnet ist. Die Aussparung 103 kann wenigstens teilweise komplementär zu wenigstens einem Teil des Kerns 101 ausgebildet sein. Insbesondere kann die Aussparung 103 so ausgebildet sein, dass der Kern 101 innerhalb des Kerns 102 linear und/oder parallel zu der Mittenachse 101.1 des Kerns 101 geführt ist.

Der Kern 102 ist ausgebildet, einen Teil der Kammer 2 gießherzustellen, vorzugsweise derart, dass die Einlassöffnung 16 nur durch den Kern 101 hergestellt wird. Der Kern 102 ist vorzugsweise so ausgebildet, dass durch ihn der Boden 18, auf dem beispielsweise die Einlassöffnung 16 vorgesehen und der die Kammer 2 vorzugsweise (beispielsweise von Unten) begrenzt, und/oder ein Teil der Ecke 17 gießhergestellt werden kann. Die Ecke 17 ist zum einen durch die Wand 31 und zum anderen durch einen quer zu der Wand 31 verlaufenden Abschnitt, der beispielsweise im Wesentlichen senkrecht zu der Mittenachse 30 der Kammer 2 verläuft, gebildet, wobei der Kern 102 beispielsweise so ausgebildet ist, dass durch ihn der quer zu der Wand 31 verlaufende Abschnitt gießhergestellt werden kann. Das Gehäuse kann eine (beispielsweise ringförmige) Aussparung aufweisen, die durch den Boden 18 (von unten) begrenzt ist. Die Aussparung kann die Einlassöffnung 16 und/oder wenigstens einen Teil der Wand 31 (vorzugsweise vollständig) umlaufen.

Der Kern 102 kann so ausgebildet sein, dass durch ihn (d.h. mittels oder mit ihm oder unter Verwendung von ihm) zumindest ein Teil des Befestigungsbereichs 20 gießhergestellt werden kann. Insbesondere kann vorgesehen sein, dass durch den Kern 102 wenigstens der Rand 22 des Befestigungsbereichs 20 gießhergestellt werden kann, vorzugsweise durch einen zylindrischen und/oder konischen Abschnitt, dessen Mittenachse vorzugsweise die Mittenachse 102.1 des Kerns 102 ist oder vorzugsweise parallel zu dieser ist. Alternativ oder zusätzlich können unter Verwendung von wenigstens dem Kern 102 noch andere Bereiche, insbesondere des Körpers 1, gießhergestellt werden, beispielsweise wenigstens ein Teil eines spiralförmigen Strömungskanals 19 (siehe Figur 3) des Gehäuses bzw. Körpers 1. Der Strömungskanal 19 erstreckt sich vorzugsweise derart, dass sein stromabwärtiges Ende 191 in den Auslasskanal 6 des Auslassstutzens 5 mündet.

Die Kernanordnung 100 kann ferner einen Einlasskanalkern 104 zur Gießherstellung von wenigstens einem Teil des distalen Endes 42 des Einlasskanals 4 aufweisen; unter Verwendung von wenigstens dem Einlasskanalkern 104 kann also wenigstens ein Teil des distalen Endes 42 des Einlasskanals 4 durch Spritzgießen hergestellt werden.

Während der Gießherstellung des Gehäuses ist ein Winkel zwischen den Kernen 104, 101 gebildet, der vorzugsweise dem Winkel zwischen der Mittenachse 42.1 des distalen Endes 42 und der Mittenachse 41.1 des proximalen Endes 41 entspricht. Der Winkel zwischen den Kernen 104, 101, vorzugsweise zwischen deren Mittenachsen 104.1, 101.1, kann also beispielsweise stumpf sein und vorzugsweise in einem Bereich von 90° bis 110°, besonders bevorzugt von 95° bis 105° liegen. Während der Gießherstellung treffen die Kerne 101, 104 direkt oder indirekt aufeinander. Der Einlasskanalkern 104 kann einen konischen und/oder zylindrischen Abschnitt aufweisen, durch den zumindest ein Teil des distalen Endes 42 gießhergestellt werden kann, wobei die Mittenachse 104.1 des Einlasskanalkerns 104 die Mittenachse dieses zylindrischen und/oder konischen Abschnitts des Einlasskanalkerns 104 bilden kann.

Wie in Figur 5 erkennbar, kann der Einlasskanalkern 104 (oder alternativ der Kern 101) zudem so vorgesehen sein, dass unter der Verwendung von ihm die konvexe Rundung 33 durch Spritzgießen hergestellt werden kann. Hierfür kann der Einlasskanalkern 104 einen reduzierbaren, insbesondere zusammenlegbaren Abschnitt 105 aufweisen. Der Abschnitt 105 ist vorzugsweise an einem Ende des Einlasskanalkerns 104 vorgesehen, sodass die Kerne 104, 101 beispielsweise wenigstens über den Abschnitt 105 miteinander verbunden werden können während der Gießherstellung. Im nichtreduzierten Zustand des Abschnitts 105 wird durch den Abschnitt 105 die konvexe Rundung 33 gießhergestellt, wobei im reduzierten Zustand des Abschnitts 105 der Einlasskanalkern 104 aus dem gießhergestellten Einlasskanal 4 entnommen wird. Der Abschnitt 105 kann zusammenlegbar und damit reduzierbar sein, indem er einen Mechanismus (zum Beispiel ein oder mehrere Gelenke) aufweist, die eine Zusammenlegung des Abschnitts 105 ermöglichen. Alternativ oder zusätzlich kann der Abschnitt 105 auch reduzierbar sein, indem er einfahrbar ist, beispielsweise einfahrbar in einen Teil (zum Beispiel einen Hohlraum) des Einlasskanalkerns 104. Der Einlasskanalkern kann einen Mechanismus (zum Beispiel ein lineares Führungselement wie eine Schiene) aufweisen, über den der Abschnitt 105 eingefahren werden kann. Der Abschnitt 105 ist eingefahren im reduzierten Zustand und nichteingefahren im nichtreduzierten Zustand.

Dadurch, dass der Abschnitt 105 reduzierbar ist, kann der Einlasskanalkern 104 samt Abschnitt 105 einfach aus dem gegossenen Gehäuse entfernt werden. Mit anderen Worten kann der Abschnitt 105 so reduziert werden, dass er einem Herausnehmen des Einlasskanalkerns 104 aus dem Gehäuse nicht im Weg steht. Somit kann eine komplexe Begrenzung des Einlasskanals 4, nämlich die konvexe Rundung 33, die für strömungstechnisch vorteilhafte Bedingungen in dem Einlasskanal 4 sorgt, einfach hergestellt werden.

Die Kernanordnung 100 kann zudem einen Auslasskanalkern 106 zur Gießherstellung von wenigstens einem Teil des Auslasskanals 6, beispielsweise von wenigstens dem distalen Ende 61 des Auslasskanalkerns 6, aufweisen; unter Verwendung von wenigstens dem Auslasskanalkern 106 kann also der wenigstens eine Teil des Auslasskanals 6 durch Spritzgießen hergestellt werden. Durch entsprechendes Vorsehen des Auslasskanalkerns 106 kann wenigstens ein Teil des Auslasskanals 6 so vorgesehen werden, dass das distale Ende 42 und/oder das proximale Ende 41 des Einlasskanals 4 zu dem wenigstens einen Teil des Auslasskanals 6 geneigt ist. Der Auslasskanalkern 106 kann so vorgesehen sein, dass ein Winkel zwischen dem Auslasskanalkern 106, insbesondere einer Mittenachse 106.1 des Auslasskanalkerns 106, und dem Einlasskanalkern 104, insbesondere dessen Mittenachse 104.1, in einem Bereich von 15° bis 35°, vorzugweise und 20° bis 30°, besonders bevorzugt von 24° bis 28° liegt oder beispielsweise 26° beträgt. Der Auslasskanalkern 106 kann einen konischen und/oder zylindrischen Abschnitt aufweisen, durch den zumindest ein Teil des distalen Endes 61 gießhergestellt werden kann, wobei die Mittenachse 106.1 des Einlasskanalkerns 106 die Mittenachse dieses zylindrischen und/oder konischen Abschnitts des Auslasskanalkerns 106 bilden kann.

Wenigstens der Kern 101 und/oder der Kern 102 kann/können jeweils ein Dauerkern sein. Alternativ oder zusätzlich können der Kern 104, der Abschnitt 105 und/oder der Kern 106 jeweils ein Dauerkern sein.

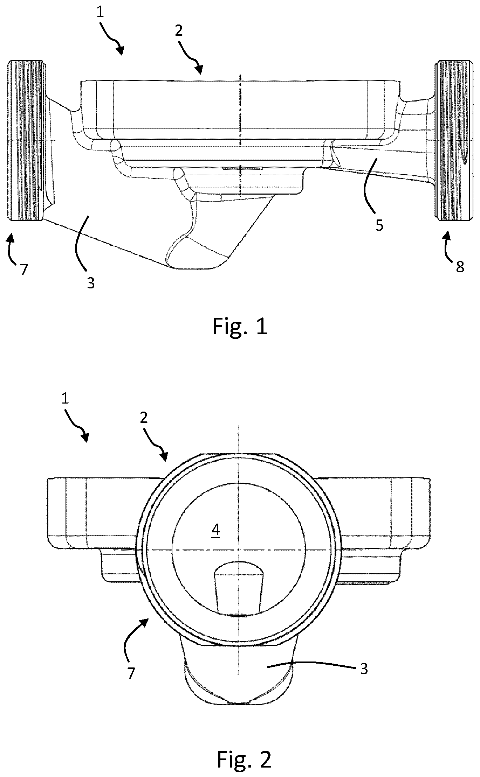

Die Kernanordnung 100 kann in eine Gussform gelegt werden, um mit der Kernanordnung 100 ein Gehäuse zu gießen, wie beispielsweise das in den Figuren 1 bis 4 gezeigte Gehäuse. Das Gehäuse erhält somit Hohlräume, die zu der Kernanordnung 100 wenigstens teilweise komplementär ausgebildet sind.

Das Gehäuse ist wenigstens teilweise aus einem Verbundwerkstoff und/oder Kunststoff hergestellt. Das heißt, dass zur Herstellung des Gehäuses mit der Kernanordnung 100 ein Verbundwerkstoff und/oder ein Kunststoff verwendet wird.

Die Figur 6 zeigt beispielhaft, wie durch das Gehäuse gemäß dem oben genannten Ausführungsbeispiel, in dem die Wand 31 relativ zu der Mittenachse 30 der Kammer 2 quer verläuft, Druckverluste innerhalb des Gehäuses reduziert werden können. Gemäß Figur 6 wird das erfindungsgemäße Ausführungsbeispiel mit einem Vergleichsgehäuse ("Gusseisen") verglichen, das gusseisern ("cast iron") ist. Erkennbar ist, dass in dem erfindungsgemäßen Beispiel die Förderhöhen H nahezu identisch sind zu dem gusseisernen Gehäuse. Folglich kann durch die erfindungsgemäße Lösung nicht nur das Gehäuse besonders einfach, nämlich durch Spritzgießen und unter Verwendung von Kunststoff und/oder einem Verbundwerkstoff, hergestellt, sondern auch ein Druckabfall des Fluids in dem Gehäuse effektiv verringert werden.

## Patentansprüche

1. Spritzgegossenes Gehäuse aus Kunststoff und/oder einem Verbundwerkstoff für eine fluidführende Vorrichtung, insbesondere für eine Kreiselpumpe, wobei das Gehäuse aufweist:
- einen Einlassstutzen (3) mit einem Einlasskanal (4) für ein Fluid,
- einen Auslassstutzen (5) mit einem Auslasskanal (6),
- eine Kammer (2) für ein drehantreibbares Förderrad, wobei die Kammer (2) eine Einlassöffnung (16) aufweist, in die ein proximales Ende (41) des Einlasskanals (4) mündet, und
- einen Befestigungsbereich (20), der sich im Wesentlichen senkrecht zu einer Mittenachse (30) der Kammer (2) radial nach außen erstreckt,
wobei der Einlassstutzen (3) eine Wand aufweist (31), die wenigstens einen Teil des proximalen Endes (41) des Einlasskanals (4) und wenigstens einen Teil der Einlassöffnung (16) begrenzt, wobei die Wand (31) zu der Mittenachse (30) quer verläuft,
wobei die Wand (31) erhalten ist durch Spritzgießherstellen mit einem Kern (101), der zur Mittenachse (30) der Kammer (2) quer verläuft.

2. Gehäuse nach Anspruch 1, wobei der Kern (101) eine Mittenachse (101.1) aufweist, die quer zur Mittenachse (30) der Kammer (2) verläuft,
wobei vorzugsweise die Mittenachse (101.1) des Kerns (101) eine Mittenachse eines insbesondere zylindrischen und/oder konischen Abschnitts des Kerns (101) ist, wobei durch den Abschnitt wenigstens die Wand (31) und vorzugsweise wenigstens ein Teil der Einlassöffnung (16) spritzgießhergestellt ist, wobei der Abschnitt des Kerns (101) vorzugsweise einen elliptischen Querschnitt aufweist.

3. Gehäuse nach einem der vorhergehenden Ansprüche, wobei in einem Schnitt parallel zur Mittenachse (30) der Kammer (2) die Wand (31) sich ausgehend von der Einlassöffnung (16), insbesondere von einem die Einlassöffnung (16) begrenzenden Rand, entlang einer Geraden erstreckt, die quer zur Mittenachse (30) der Kammer (2) ist.

4. Gehäuse nach einem der vorhergehenden Ansprüche, wobei ein Winkel zwischen der Wand (31) oder einer Mittenachse (41.1) des proximalen Endes (41) des Einlasskanals (4) und der Mittenachse (30) der Kammer (2) in einem Bereich von 5° bis 50°, bevorzugt in einem Bereich von 15° bis 45°, weiter vorzugsweise von 25° bis 40°, besonders bevorzugt von 34° bis 38° liegt.

5. Gehäuse nach einem der vorhergehenden Ansprüche, wobei der Einlasskanal (4) ein distales Ende (42) aufweist, und wobei ein Winkel zwischen einer Mittenachse (42.1) des distalen Endes (42) und der Wand (31) oder einer Mittenachse (41.1) des proximalen Endes (41) des Einlasskanals (4) stumpf ist und vorzugsweise in einem Bereich von 90° bis 110°, besonders bevorzugt von 95° bis 105° liegt.

6. Gehäuse nach einem der vorhergehenden Ansprüche, wobei ein Winkel zwischen einer Achse, auf der der Einlassstutzen (3) und der Auslassstutzen (5) jeweils wenigstens teilweise angeordnet sind und die sich vorzugsweise durch einen Anschluss (7) des Einlassstutzens (3) und einen Anschluss (8) des Auslassstutzens (5) erstreckt, und einer Mittenachse (42.1) des distalen Endes (42) des Einlasskanals (4) in einem Bereich von 15° bis 35°, vorzugsweise von 20° bis 30°, besonders bevorzugt von 24° bis 28° liegt.

7. Gehäuse nach einem der vorhergehenden Ansprüche, wobei der Befestigungsbereich (20) ein Flansch ist.

8. Gehäuse nach einem der vorhergehenden Ansprüche, wobei der Befestigungsbereich (20) sich wenigstens teilweise um die Mittenachse (30) der Kammer (2) herum erstreckt.

9. Gehäuse nach einem der vorhergehenden Ansprüche, wobei der Einlassstutzen (3) eine konvexe Rundung (33) aufweist, die wenigstens das proximale Ende (41) und vorzugsweise das distale Ende (42) des Einlasskanals (4) seitlich begrenzt.

10. Gehäuse nach dem vorhergehenden Anspruch, wobei die konvexe Rundung (33) in einem Schnitt parallel zur Mittenachse (30) der Kammer (2) einen Bogen beschreibt, wobei ein Winkel zwischen zwei Tangenten, die Endpunkte des Bogens berühren, stumpf ist und vorzugsweise in einem Bereich von 90° bis 110°, besonders bevorzugt von 95° bis 105° liegt.

11. Kernanordnung (100) zum wenigstens teilweise Herstellen eines spritzgegossenen Gehäuses für eine fluidführende Vorrichtung, insbesondere für eine Kreiselpumpe, insbesondere für ein Gehäuse nach einem der vorhergehenden Ansprüche,
wobei das Gehäuse einen Einlassstutzen (3) mit einem Einlasskanal (4) für ein Fluid und eine Kammer (2) für ein drehantreibbares Förderrad aufweist, wobei die Kammer (2) eine Einlassöffnung (16) aufweist, in die ein proximales Ende (41) des Einlasskanals (4) mündet, wobei die Kernanordnung (100) aufweist:
- einen ersten Kern (102), wobei unter Verwendung von wenigstens dem ersten Kern (102) wenigstens ein Teil der Kammer (2) durch Spritzgießen herstellbar ist, und
- einen zweiten Kern (101), wobei unter Verwendung von wenigstens dem zweiten Kern (101) wenigstens ein Teil des proximalen Endes (41) des Einlasskanals (4) und wenigstens ein Teil der Einlassöffnung (16) durch Spritzgießen herstellbar ist,
wobei der zweite Kern (101) von dem ersten Kern (102) lösbar ist und relativ zu dem ersten Kern (102) quer verläuft.

12. Spritzgusswerkzeug, insbesondere Spritzgussform, wobei das Spritzgusswerkzeug eine Kernanordnung (100) nach Anspruch 11 aufweist.

13. Gehäuse nach einem der Ansprüche 1 bis 10, wobei das Gehäuse monolithisch ausgebildet ist.

14. Fluidführende Vorrichtung, insbesondere Kreiselpumpe, aufweisend ein Gehäuse nach einem der Ansprüche 1 bis 11 und ein drehantreibbares Förderrad, wobei das Förderrad wenigstens teilweise in der Kammer (2) des Gehäuses und um die Mittenachse (30) der Kammer (2) herum drehbar angeordnet ist.
